# EUROPEAN PATENT APPLICATION

(11) **EP 3 196 823 A1**
(43) Date of publication of application: **26.07.2017**
(21) Application number: 16202779.1
(22) Date of filing: 07.12.2016
(51) Int. Cl.: G06Q 30/02

(54) **SYSTEM AND METHOD FOR AUTOMATIC DATA COLLECTION**

(30) Priority: 25.01.2016 US 201662286580 P; 27.06.2016 US 201662355029 P
(71) Applicant: Kik Interactive Inc., Waterloo, Ontario N2L 4E7 (CA)
(72) Inventor: LIVINGSTON, Ted, Waterloo, Ontario N2L 4E7 (CA); BEST, Christopher, Waterloo, Ontario N2L 4E7 (CA); KIM, Jae Hyung, Waterloo, Ontario N2L 4E7 (CA); ROBERTS, Michael, Waterloo, Ontario N2L 4E7 (CA); TCHAO, Evelyn, Waterloo, Ontario N2L 4E7 (CA); KASSAM, Shums, Waterloo, Ontario N2L 4E7 (CA); LING, Jaclyn, Waterloo, Ontario N2L 4E7 (CA); VOLKOVS, Maksims, Waterloo, Ontario N2L 4E7 (CA)
(74) Representative: chapman + co

(57) **Abstract**

The method of collecting input data at a server includes: receiving a message from a client device, the message containing a location identifier; responsive to receiving the message, retrieving a plurality of keywords corresponding to the location identifier from a memory; transmitting a message to the client device containing the retrieved keywords; receiving a selection of one of the retrieved keywords from the client device; retrieving from the memory an action identifier corresponding to the selected keyword; and executing the action corresponding to the action identifier.

## Description

### CROSS-REFERENCE TO RELATED APPLICATIONS

This application claims priority to U.S. provisional patent application nos. 62/286580, filed January 25, 2016 and 62/355029, filed June 27, 2016, the contents of which are incorporated herein by reference.

### FIELD

The specification relates generally to communications systems, and specifically to a system and method for data collection in a communication system.

### BACKGROUND

Various activities conducted electronically require the collection of data from client devices (e.g. smart phones). Such data collection is typically performed via web pages. However, collection of data via web pages can lead to inefficient use of network resources (e.g. bandwidth) as well as reduced quality and quantity of collected data.

### SUMMARY

According to an aspect of the specification, a data collection system is provided, comprising: a plurality of graphical identifiers affixed to respective ones of a plurality of objects, each graphical identifier encoding a respective one of a plurality of location identifiers; a server storing a plurality of response data records, each record including a plurality of selectable keywords; at least one of the records including an action identifier; the server configured to: receive a message from a client device, the message containing one of the plurality of location identifiers extracted by the client device from an image of one of the graphical identifiers; responsive to receiving the message, retrieve one of the response data records, and transmit the selectable keywords of the retrieved response data record to the client device; receive, from the client device, a selection of one of the selectable keywords; and based on the selection received from the client device and the location identifier, execute an action corresponding to the action identifier.

According to another aspect of the specification, a method in a server for data collection is provided, comprising: storing a plurality of response data records, each record including a plurality of selectable keywords; at least one of the records including an action identifier; receiving a message from a client device via a network, the message containing one of a plurality of location identifiers extracted by the client device from an image of one of a plurality of graphical identifiers affixed to respective ones of a plurality of objects; responsive to receiving the message, retrieving one of the response data records, and transmitting the selectable keywords of the retrieved response data record to the client device; receiving, from the client device, a selection of one of the selectable keywords; and based on the selection received from the client device and the location identifier, executing an action corresponding to the action identifier.

### BRIEF DESCRIPTIONS OF THE DRAWINGS

Embodiments are described with reference to the following figures, in which:
FIG. 1 depicts a communications system, according to a non-limiting embodiment;
FIG. 2 depicts certain internal components of a client device and a messaging server of the system of FIG. 1, according to a non-limiting embodiment;
FIG. 3 depicts a method of collecting data in the system of FIG. 1, according to a non-limiting embodiment;
FIG. 4 depicts an example interface displayed by a client device of FIG. 1 during the performance of the method of FIG. 3, according to a non-limiting embodiment;
FIG. 5 depicts a method of performing block 320 of the method of FIG. 3, according to another non-limiting embodiment;
FIG. 6 depicts an example interface displayed by a client device of FIG. 1 during the performance of the method of FIG. 5, according to a non-limiting embodiment;
FIG. 7 depicts another example interface displayed by a client device of FIG. 1 during the performance of the method of FIG. 5, according to a non-limiting embodiment;
FIG. 8 depicts a method of performing block 530 of the method of FIG. 5, according to a non-limiting embodiment; and
FIG. 9 depicts an example interface displayed by a client device of FIG. 1 during the performance of the method of FIG. 8, according to a non-limiting embodiment.

### DETAILED DESCRIPTION OF THE EMBODIMENTS

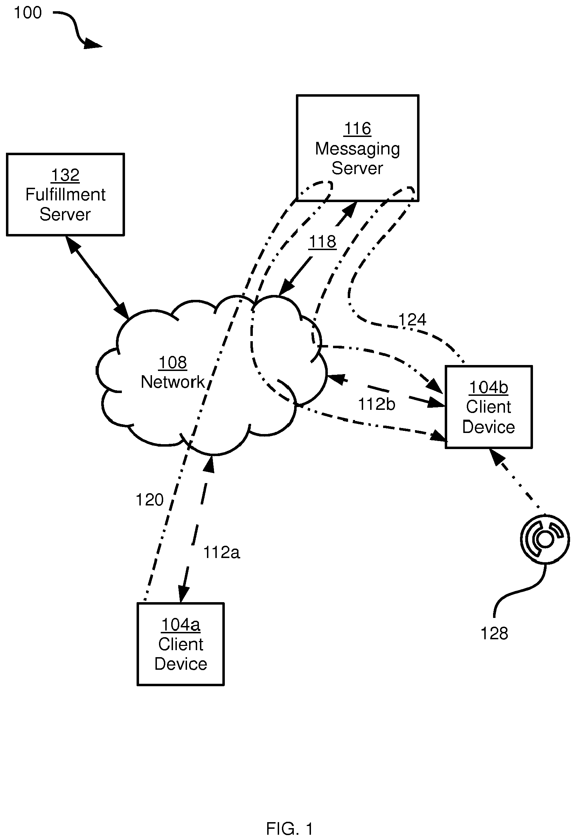

FIG. 1 depicts a communications system 100. System 100 includes a plurality of client computing devices, of which two examples 104a and 104b are shown (referred to generically as a client computing device 104 or a client device 104, and collectively as client computing devices 104 or client devices 104). Additional client computing devices (not shown) can be included in system 100. Each client computing device 104 can be any of a cellular phone, a smart phone, a tablet computer, a wearable device such as a smart watch or smart glasses, and the like.

Client computing devices 104a and 104b are connected to a network 108 via respective links 112a and 112b, which are illustrated as wireless links but can also be wired links, or any suitable combination of wired and wireless links. Network 108 can include any suitable combination of wired and wireless networks, including but not limited to a Wide Area Network (WAN) such as the Internet, a Local Area Network (LAN) such as a corporate data network, cell phone networks, WiFi networks and the like.

Via network 108, client computing devices 104 can communicate with a messaging server 116 connected to network 108 via a link 118. Messaging server 116 provides a messaging service to client computing devices 104. For example, client computing device 104a can execute a messaging application for sending and receiving messages to and from messaging server 116. In the embodiments discussed herein, the messages sent and received by devices 104 are instant messages (IM, e.g. Internet Protocol-based messages utilizing a form of the XMPP protocol or the like). In other embodiments, the messages can include any suitable combination of IM, Short Message Service (SMS) messages, Multimedia Messaging Service (MMS) messages and the like.

Messaging server 116 stores associations between messaging service subscriber identifiers (e.g. account names) and identifiers of client computing devices 104 such as IP addresses, MAC addresses and the like. Messaging server 116 can therefore receive a message from a device 104 (e.g. a message sent from device 104a and addressed to the subscriber identifier associated with device 104b), look up the device identifier of the addressee (e.g. device 104-b) based on the subscriber identifier contained in the message, and route the message via network 108 to the addressee (e.g. device 104b), as shown by a message path 120. As will be discussed below in greater detail, messaging server 116 can also route certain messages to other servers, or internally for further processing at server 116 itself.

Messaging server 116 is also configured to respond to certain messages autonomously. In other words, messaging server 116 can be configured to operate as a chatbot by automatically responding to messages received from client computing devices 104. For example, as shown in FIG. 1 by a message path 124, device 104b transmits a message to messaging server 116 and messaging server 116 generates and returns a response to device 104b via network 108. In system 100, chatbots can be simple systems providing predetermined responses to identified messages, or categories of messages, or can be sophisticated artificial intelligence systems employing natural language processing and/or deep learning techniques.

Additionally, messaging server 116 is configured to select responses in the performance of the above-mentioned chatbot functionality based at least in part on location data contained in the messages received from client devices 104. Such location data may be derived in part or in whole at the client devices 104 from via a variety of methods, including: a location identifier associated with link 112 (i.e. - the identity of a WiFi Access Point which link 122 is established with and which has a known location and coverage area); an RFID tag; an NFC tag; a beacon (e.g. a Bluetooth^{™} low energy beacon); a GPS-derived location and/or a machine-readable graphics such as a code 128, which may be presented on an object, electronic display or the like. Messaging server 116, in addition to responding to client devices 104 based on such location data, can also be configured to transmit instructions to a fulfillment server 132 based on the location data and other content of messages received from client devices 104. In general, the instructions sent to fulfillment server 132 cause fulfillment server 132 to take any of a variety of actions, such as the delivery of an item to the location identified by the above-mentioned location identifier.

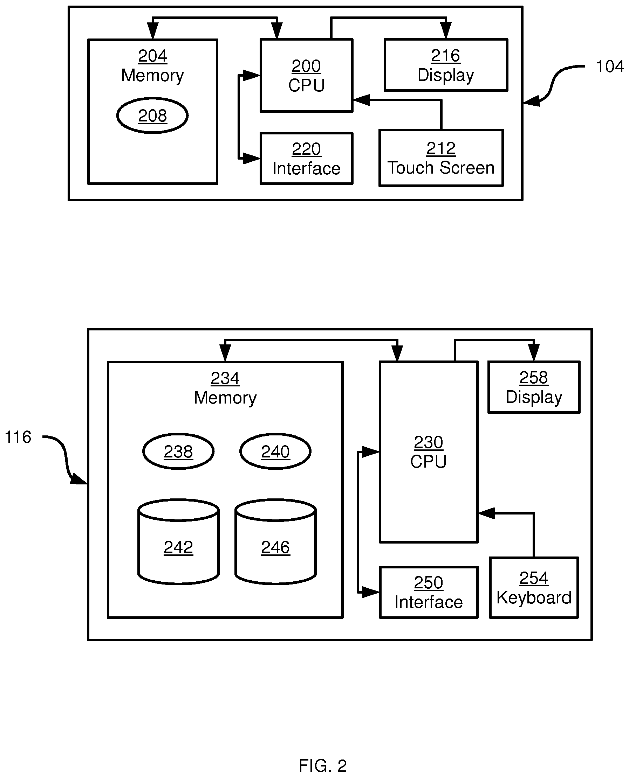

Before a detailed discussion of the operation of system 100 is provided, certain components of a client computing device 104 (which, as noted earlier, refers generically to any of devices 104a and 104b) and messaging server 116 will be described with reference to FIG. 2.

Referring o FIG. 2, client computing device 104 includes a central processing unit (CPU) 200, also referred to herein as processor 200, interconnected with a memory 204. Memory 204 stores computer readable instructions executable by processor 200, including a messaging application 208. Processor 200 and memory 204 are generally comprised of one or more integrated circuits (ICs), and can have a variety of structures, as will now occur to those skilled in the art (for example, more than one CPU can be provided). Processor 200 executes the instructions of messaging application 208 to perform, in conjunction with the other components of client computing device 104, various functions related to exchanging messages with messaging server 116.

Client computing device 104 also includes input devices interconnected with processor 200, in the form of a touch screen 212. Client computing device 104 can also include other input devices, such as any suitable combination of a camera, a microphone, NFC receiver, RFID transceiver, a GPS receiver, a beacon and the like (not shown). Client computing device 104 also includes output devices interconnected with processor 200, including a display 216 integrated with touch screen 212. Other output devices can also be provided, such as a speaker (not shown). Client computing device 104 also includes a network interface 220 interconnected with processor 200, which allows client computing device 104 to connect to network 108 via a link 112 (e.g. link 112a, for device 104a). Network interface 220 thus includes the necessary hardware, such as radio transmitter/receiver units, network interface controllers and the like, to communicate over a link 112.

Messaging server 116 includes a central processing unit (CPU) 230, also referred to herein as processor 230, interconnected with a memory 234. Memory 234 stores computer readable instructions executable by processor 230, including a routing application 238 and a data collection application 240. Processor 230 and memory 234 are generally comprised of one or more integrated circuits (ICs), and can have a variety of structures, as will now occur to those skilled in the art (for example, more than one CPU can be provided).

Processor 230 executes the instructions of applications 238 and 240 to perform, in conjunction with the other components of messaging server 116, various functions related to receiving and responding to messages from client computing devices 104. In the discussion below of those functions, messaging server 116 is said to be configured to perform those functions - it will be understood that messaging server 116 is so configured via the processing of the instructions in applications 238 and 240 by the hardware components of messaging server 116 (including processor 230 and memory 234). Processor 230 can include any suitable combination of one or more general purpose central processing units (CPUs) as mentioned above, and one or more graphics processing units (GPUs). The performance of the various processing tasks discussed herein can be shared between such CPUs and GPUs, as will be apparent to a person skilled in the art

Memory 234 also stores a routing database 242, which contains messaging account identifiers and corresponding device identifiers (e.g. IP addresses and the like) to enable server 116 to route messages between client devices 104 via the execution of application 238. Also stored in memory 234 is a data collection database 246, which contains data employed by server 116 to respond autonomously to messages from client devices 104, as well as data defining various actions taken by server 116 (such as sending instructions to fulfillment server 132) in response to messages received from client devices 104.

Messaging server 116 also includes a network interface 250 interconnected with processor 230, which allows messaging server 116 to connect to network 108 via link 118. Network interface 250 thus includes the necessary hardware, such as network interface controllers and the like, to communicate over link 118. Messaging server 116 also includes input devices interconnected with processor 230, such as a keyboard 254, as well as output devices interconnected with processor 230, such as a display 258. Other input and output devices (e.g. a mouse, speakers) can also be connected to processor 230. In some embodiments (not shown), keyboard 254 and display 258 can be connected to processor 230 via network 108 and another computing device. In other words, keyboard 254 and display 258 can be local (as shown in FIG. 2) or remote.

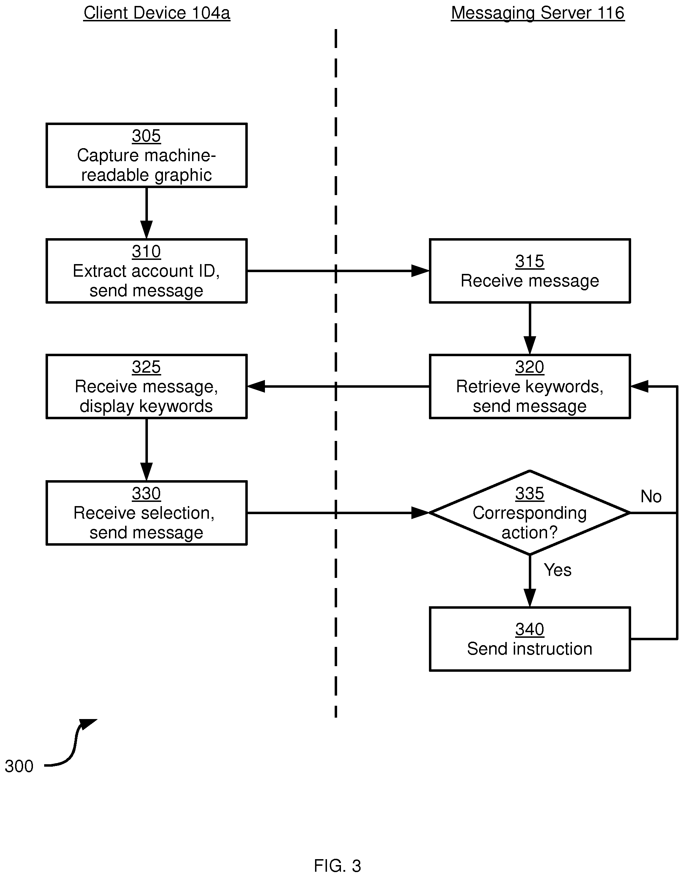

Having described certain internal components of devices 104 and server 116, the actions performed by devices 104 and server 116 will be discussed in greater detail. Referring now to FIG. 3, a method 300 of collecting data from client devices 104 is illustrated. Method 300 will be described below in connection with its performance in system 100. Specifically, certain blocks of method 300 are performed by client devices 104 via the execution of application 208 by processor 200, while other blocks of method 300 are performed by server 116, via the execution of application 240 by processor 230.

This specific example illustrates a method by which a customer seated in a restaurant can participate in a survey and be provided with a reward for their participation.

At block 305, client device 104a (in the present example, although it will be apparent that the client-centric blocks of method 300 can also be performed by other client devices) is configured to capture an image of a machine-readable graphic, such as graphic 128 shown in FIG. 1. Graphic 128 encodes data in a machine-readable format, such as a 1 D, 2D or 3D bar code, QR-code or the like. In this example, graphic 128 can be provided as one of a set of unique table display cards, each respectively placed on a different table in the restaurant, or as a one of a set of unique stickers each respectively applied to a different table, etc. In this example, the sticker/table display card, etc. includes a statement such as "Scan this code to take our three question survey and earn a reward" so that the user understands the purpose of the graphic code.

At block 310, client device 104a of the user sitting at a respective table, having captured an image of graphic 128 at that table, is configured to decode graphic 128 to extract the data encoded therein. In general, the data encoded in graphic 128 includes a messaging account identifier corresponding to one of the messaging accounts stored in database 242 at server 116. More specifically, as will be seen below, the messaging account identifier encoded within graphic 128 is an account identifier corresponding to application 240 at server 116. That is, messages sent to the encoded account identifier are routed at messaging server 116 (via execution of application 238) to application 240 rather than to another client device 104.

The data encoded within graphic 128 also includes a location identifier. A wide variety of location identifiers are contemplated, additional examples of which will be discussed below. Indeed, in some embodiments the messaging account identifier itself is also the location identifier; in other embodiments, the messaging account identifier in combination with additional data define the location identifier. In the present example performance of method 300, graphic 128 encodes an account identifier corresponding to application 240 at server 116, as well as a location identifier. The location identifier includes an identifier, such as an alphanumerical string, of the table within the restaurant at which graphic 128 is displayed. In other embodiments, the location identifier includes two or more location identifier elements, such as a first element identifying the restaurant (e.g. a franchise number or name), and a second element identifying the table within the restaurant. The nature of the location identifier is not particularly limited - the location identifier (and any location identifier elements) can include any one of, or any suitable combination of, a table number, a street address at which the table is located, a geographic location of the table in a local frame of reference (e.g. a coordinate system established within the restaurant, i.e. "table number 4 on the second floor")) or a global frame of reference (e.g. GPS coordinates). As will be discussed in greater detail below, the location identifier or set of location identifier elements can also identify non-fixed locations, such as the location of an inventory item (e.g. a type of clothing item in a clothing store). The location identifier in such embodiments can include the stock keeping unit (SKU) identifier of the item.

In response to extracting the messaging account identifier and location data from the graphic, client device 104a is configured to transmit a message addressed to the messaging account identifier via network 108 and messaging server 116. The message can be sent automatically - that is, without receipt of a send instruction as input data from the operator of client device 104a - and contains at least the location data extracted from graphic 128. In other embodiments, the transmission of an initial message (automatic or otherwise) may be omitted. For example, client device 104a can be configured to report a current location to messaging server 116. Server 116 can therefore be configured, in some embodiments, to determine whether the current location of client device 104a is within a predetermined area (e.g. within a predefined range of the location identified by graphic 128) and when the determination is affirmative, to proceed with the performance of method 300 without requiring an explicit initial message from client device 104a.

At block 315, server 116 is configured to receive the message sent by client device 104a. More specifically, via the execution of application 238 at server 116, the message is received, the network address of the addressee (i.e. the messaging account identifier) is retrieved from database 242, and the message is forwarded to that network address. In the present example, the network address is internal to server 116, and thus the message is routed internally to application 240. In other embodiments, however, application 240 can be executed at a separate computing device.

In this example, having received the message, at block 320 server 116 is configured to store the message (or at least the location identifier therein) and retrieve at least one keyword from database 246 based on the contents of the message from client device 104a. Database 246, in general, contains a plurality of records each defining one or both of an autonomous response to be sent to client device 104a and a further action to be performed by server 116 in response to a message received from client device 104a. An example of database 246 is shown below in Table 1.

**Table 1: Example Database 246**

| **Message content** | **Body** | **Keywords** | **Action** |
|---|---|---|---|
| *[Initial]* | "Thanks for taking our survey! What is your favourite pizza topping?" | Pepperoni; Olives | N/A |
| Olives | "Gross! Do you prefer green or black olives?" | Green; Black | N/A |
| Pepperoni | "Mine too! Spicy or mild?" | Spicy; Mild | N/A |
| Green; Black; Spicy; Mild | "All done; we'll send a free cookie to your table in a second" | N/A | *[Order item to table]* |

As seen above, four autonomous responses are defined in database 246. Each response record includes an indication of what client message content leads to the use of that response: a message from client device 104a containing an "initial message" flag (or an empty message body, for example) causes server 116 to reply with a message including the message body "Thanks for taking our survey! What is your favourite pizza topping?". That first record is selected at block 320 in the present example performance of method 300, as the above-mentioned message from client device 104a is assumed to be the first message received at application 240 from client device 104a.

Each record of database 246 can also include one or more keywords that are transmitted to client device 104a with the above-mentioned message body. In the present example, the keywords "Pepperoni" and "Olives" are stored in the selected record of database 246. Therefore, at block 320, server 116 sends a message to client device 104a that includes the body mentioned above, as well as the keywords ""Pepperoni" and "Olives". The message, as will now be apparent to those skilled in the art, is routed via the execution of application 238 to client device 104a.

In some embodiments, each record of database 246 also includes one or more location identifiers. That is, distinct subsets of the response data stored in database 246 correspond to distinct location identifiers, and server 116 is configured, at block 320, to select the keywords or other response data from the subset of records that contain the location identifier received at block 315. Certain records can also contain no location identifier, or an indicator corresponding to a null location. Such response data is employed by server 116 to respond to client messages that do not include location identifiers (e.g. that were not initiated responsive to scanning graphic 128).

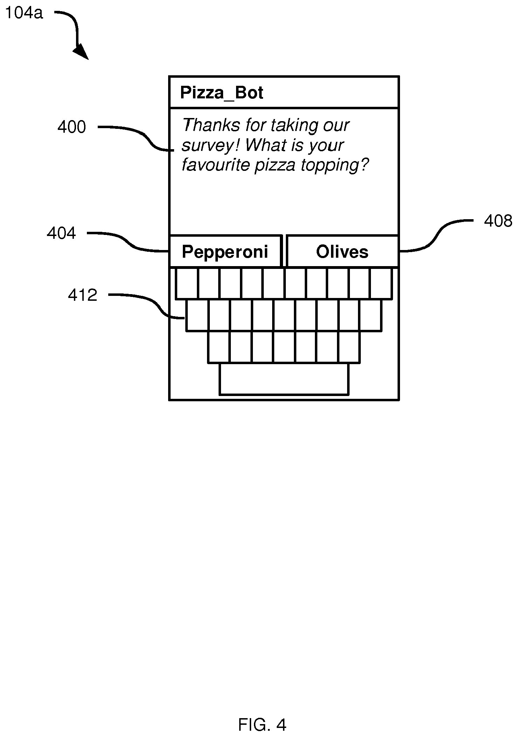

At block 325, client device 104a is configured to receive and display the message sent by server 116 at block 320. Referring to FIG. 4, client device 104a is shown presenting the message received from server 116 on display 216. The message body retrieved from database 246 as discussed above is shown in a message area 400. In addition, the keywords sent by server 116 are displayed as selectable elements 404 and 408 by client device 104a. A virtual keyboard 412 may also be presented on display 216.

At block 330, client device 104a (more specifically, processor 200) receives a selection of one of the selectable elements 400 and 408 shown in FIG. 4. That is, client device 104a receives a selection of one of the keywords received from server 116 at block 325. Responsive to receiving the selection, client device 104a is configured to send a message to server 116, with the selected keyword contained in the body of the message.

At block 335, server 116 is configured to receive the message and determine whether any action is associated with the received keyword in database 246. In the present example, as seen in Table 1, neither of the keywords shown in FIG. 4 is associated with an action. Therefore, the performance of method 300 returns to block 320, at which server 116 selects a further response to send to client device 104a. As will now be apparent to those skilled in the art, according to Table 1 either the second or third records will be selected for the next message sent to client device 104a. It will also now be apparent that a wide variety of hierarchical sequences of autonomous responses can be defined in database 246 based on earlier messages received from client devices 104. By storing the responses (particularly the selected keywords) from client devices 104, server 116 can thus collect a wide variety of data from client devices 104.

When the determination at block 335 is affirmative (as in the fourth record of Table 1), the performance of method 300 instead proceeds to block 340. At block 340, server 116 is configured to send an instruction according to the action specified in database 246. In the present example, the action is to transmit an order for a predefined item (in this example a cookie) to be delivered to the location identified in the original message from client device 104a. Thus, server 116 transmits an instruction (e.g. to fulfillment server 132, which may manage orders for the above-mentioned restaurant) to deliver the cookie (or any other suitable item) to the table identified by the location data extracted from graphic 128. At block 340, server 116 may also send a further message to client device 104a, as shown by the message body in the final record of Table 1.

A plurality of actions can also be associated with any individual record of database 246. For example, each record can include an action causing server 116 to store the selected keyword received from client device 104a in a client profile corresponding to client device 104a (or a global profile database tracking all client keyword selections). The selected keywords can also be stored remotely from server 116, in which case an action associated with any one of (or any combination of) the records in database 246 can be to transmit the selected keywords to the computing device storing selected keywords (e.g. fulfillment server 132).

Having discussed the operation of system 100 above in connection with the collection of selected keywords from client device 104a representing the completion of a survey, it will now be apparent that system 100 can be deployed to perform various other types of data collection.

In another embodiment, system 100 can be deployed to collect data representing concession orders in a facility such as a stadium. Respective unique graphics 128 can be printed or otherwise displayed in association with each seat (or table, parking space, and the like) in a portion of the facility (or in the entire facility). The graphics can encode the messaging account identifier of server 116, as well as a location identifier in the form of the seat number with which they are each associated. In other embodiments, a single graphic 128 can be displayed (e.g. in association with each seat or in a smaller number of locations than there are seats, e.g. on a display mounted centrally in the facility). The single graphic can simply identify the messaging account corresponding to application 240 at server 116. In such embodiments, more granular location data can be obtained by server 116 via the above-mentioned records in database 246. For example, a set of records can provide client device 104a with a plurality of keywords to identify the location of client device 104a within the facility.

In such embodiments, additional records in database 246 can include keywords corresponding to concessions available for sale at the facility. One record of database 246 can include a selectable keyword that, when selected at client device 104a, launches a digital wallet application at client device 104a to initiate an electronic payment for the previously selected concession items. In other words, the keywords themselves can include computer-readable instructions such as URLs, commands to launch applications at client devices 104, and the like. Payment can also be effected within application 208 at client device 104a via the mechanisms set out in Applicant's copending application no. 62/291831 entitled "System And Method For Accelerating Processing Of Electronic Transactions".

In other embodiments, system 100 can be deployed in a retail environment, in which graphics 128 are displayed adjacent to each point of sale. As in the survey collection embodiment described above, server 116 can be configured to collect survey data from client devices 104 that capture images of graphic 128 and extract the messaging account identifier of application 240 therefrom. In response to the completion of the data collection, in such embodiments server 116 can be configured (i.e. as the final action record contained in database 246) to generate or retrieve a further machine readable graphic and transmit the graphic to client device 104a in the body of a message. The further graphic may be scannable at the point of sale to entitle client device 104a to a discount at the retailer, for example.

In further embodiments, granular location identifiers such as seat or table locations can be omitted. Instead, the location identifier encoded in graphic 128 can be limited to a facility as a whole (such as the above-mentioned retailer). The subsequent collection of data via the performance of method 300 can then permit client device 104a to select and pay for merchandise. Server 116 can, at block 340, transmit an instruction to fulfillment server 132 to cause the preparation of an order at a pickup location within the facility. Server 116 can also transmit a message to client device 104a at block 340, informing client device 104a that the order is being prepared at the pickup location.

In further embodiments, the location identifier encoded within graphic 128 can be a relative location, such as a position in a drive-through queue and each car entering the queue will be shown a unique graphic code 128 that will include location data to identify the car within the queue. The records of database 246, as discussed earlier, can contain keywords permitting the collection of data defining an order of food or other items. Server 116 can also be configured to send instructions to another computing device (e.g. fulfillment server 132) not only to cause the preparation of ordered items, but also to control a display or other device presenting graphics 128. For example, an electronic display connected to fulfillment server 132 can present one of a plurality of predefined graphics 128 representing sequential queue positions. Upon receiving a message at block 315 containing a particular queue position, server 116 can be configured (i.e. as specified by an action in a record of database 246) to instruct fulfillment server 132 to display the next graphic 128 in the sequence. In this manner, a vehicle can enter a drive through queue, scan the displayed graphic code and, via interaction with a suitably configured chatbot, place their order, without the need to speak to an attendant, and to then pickup their order when their vehicle reaches the service window, designated area or allow for in-store pick-up. As mentioned above, in some embodiments the chatbot interaction can also be used to effect payment for the order as well.

In still further embodiments in retail environments, a graphic 128 can be displayed in connection with an individual item (e.g. a shirt, book, light bulb, or the like). Database 246 can include records defining selectable keywords such as sizes, colours and the like. Further selectable keywords collected by server 116 can include requests by client devices 104 to order the relevant item (either in-store, or for subsequent shipping to an address provided by client devices 104 in further messages to server 116). Other selectable keywords can include requests by client devices 104 to check stock levels (e.g. for a particular size of a shirt displayed with graphic 128). In other words, in response to sequential selections by client device 104a of a size or colour for an item, and a "check stock" keyword, server 116 can be configured (again, based on the action specified in database 246 corresponding to the selected keywords) to send a request to fulfillment server 132, which can maintain stock levels. A response received at server 116 from fulfillment server 132 can then be sent to client device 104a in the body of a message. The discussion below sets out an example of this embodiment, in which a graphic affixed to an item of clothing in a retail environment enables a client device to begin communicating with server 116 to provide server 116 with profile data, and to obtain information about the item of clothing from server 116 or fulfillment server 132.

As noted above, in some embodiments graphic 128 can be affixed to an item of clothing. For example, graphic 128 can be printed or otherwise affixed on a price tag attached to the item of clothing. In an example performance of method 300, therefore, client device 104a captures an image of the machine-readable graphic at block 305, and at block 310 extracts a messaging account identifier from the graphic. In the present embodiment, the messaging account identifier corresponds to data collection application 240, which configures server 116 to operate as a chatbot (as discussed earlier). As also discussed earlier, the data encoded in the graphic also includes a location identifier, in the form of an identifier of the item of clothing (e.g. a universal product code (UPC), SKU identifier or other product identifier). The message sent at block 310 therefore includes both the messaging account identifier and a location identifier in the form of the product identifier.

At block 315, server 116 (via the execution of application 240) is configured to receive the above-mentioned message. As noted earlier, in the present embodiment (in which both applications 238 and 240 are hosted at server 116) the message is received via the execution of application 238, the network address of the addressee (i.e. the messaging account identifier) is retrieved from database 242, and the message is forwarded to that network address. In the present example, the network address is internal to server 116, and thus the message is routed internally to application 240.

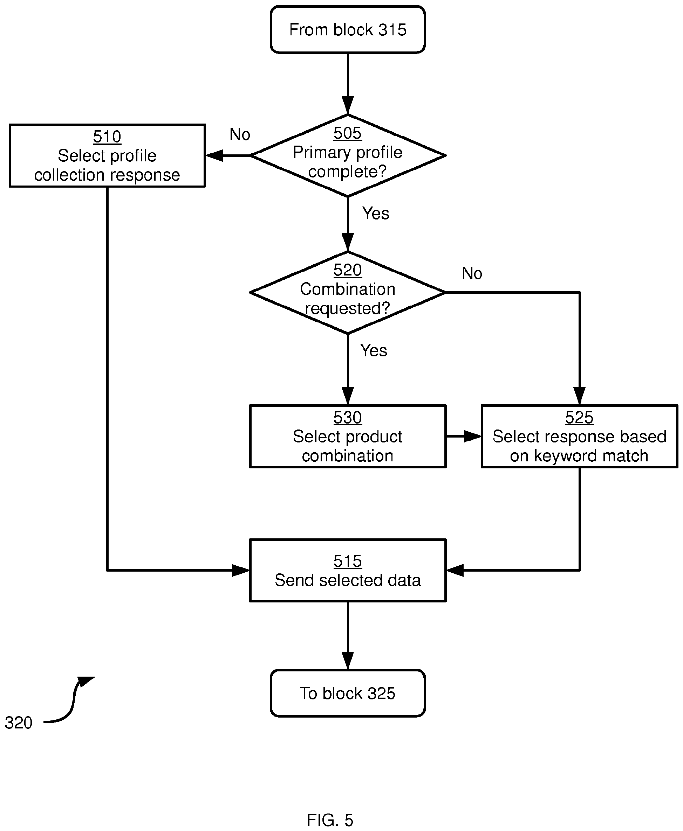

Having received the message, server 116 (specifically, via the execution of application 240) is configured to store the message and retrieve response data - which may include at least one keyword - from database 246, the response data is retrieved based on the contents of the message from client device 104a. In the present example, server 116 is configured to perform block 320 according to the blocks illustrated in FIG. 5.

Turning to FIG. 5, having received the above-mentioned message at block 315, at block 505 server 116 is configured to determine whether primary profile data stored in memory 234 in association with client device 104a (more generally, in association with the messaging account of the client device 104 from which the message was received at block 315) is complete. The nature of the primary profile data is not particularly limited. The primary profile data can include demographic attributes of the client device's operator (e.g. any one or more of age, gender, location of residence and the like), as well as attributes specific to the retail environment in which the graphic is displayed (e.g. preferred clothing styles, colours, sizes and the like).

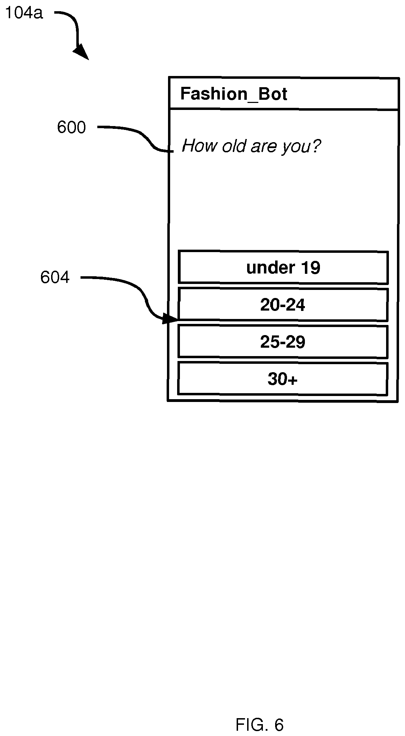

When the determination at block 505 is negative, server 116 proceeds to block 510, at which response data is selected for collecting profile data from client device 104a. The response data generally includes a question (e.g. "how old are you?") and a plurality of keywords (e.g., "under 19", "20-24", "25-29" and the like) that are selectable at client device 104a. A plurality of records each defining different responses from server 116 for collecting profile data can be stored in database 246, or in another database in memory 234. At block 515, server 116 is configured to send the response data retrieved at block 510 to client device 104a. Turning briefly to FIG. 6, client device 104a is shown displaying a profile collection message 600 received from server 116 following performances of blocks 510 and 515. In addition to a message body 600, the message includes a plurality of selectable keywords 604 that client device 104a can be configured (via the execution of application 208 by processor 200) to display in place of virtual keyboard 412, or in addition to keyboard 412 (as shown in FIG. 4).

Selection of one of the set of keywords 604 at client device 104a leads to the transmission of a message from client device 104a to server 116 (specifically, to application 240) containing the selected age bracket. In other words, FIG. 6 depicts the performance of block 325 at client device 104a, and the selection and transmission of an age bracket represents the performance of block 330 at client device 104a. At block 335, server 116 is configured to determine whether the newly received message from client device 104a corresponds to an action defined in database 246. In the present example, as will be apparent below, the determination at block 335 is negative, and thus server 116 returns to block 320 (i.e. to block 505).

Returning to FIG. 5, following the selection of an age bracket by client device 104a, it is assumed in the present example that primary profile data collection is complete (i.e. the determination at block 505 is affirmative). Server 116 is then configured to proceed to block 520 as part of the performance of block 320.

At block 520, server 116 is configured to determine whether a combination of clothing items associated with the item to which the graphic is affixed has been requested by client device 104a. The request may be explicit (e.g. a message received from client device 104a containing a request keyword), or implicit, as will be seen below. In the present example, the receipt of a message completing profile data (e.g. a selection of one of the set of keywords 604 shown in FIG. 6) does not comprise a request for a combination, and thus server 116 is configured to proceed to block 525.

At block 525, server 116 is configured to retrieve response data, generally including a message body and one or more selectable keywords, from database 246. As noted earlier, database 246 includes a plurality of records each defining one or both of an autonomous response to be sent to client device 104a and a further action to be performed by server 116 in response to a message received from client device 104a. A further example of database 246 is shown below in Table 2.

**Table 2: Example Database 246**

| **Message content** | **Body** | **Keywords** | **Action** |
|---|---|---|---|
| *[default]* | "What can I help you with?" | Stock check; Price check; Recommend outfit; Purchase | N/A |
| Stock check | "What size are you looking for?" | *[available sizes]* | N/A |
| *[size]* | "This item *[is* / *is not]* in stock" | N/A | *[stock request]* |
| Price check | "This item costs" *[price]* | N/A | *[price request]* |
| Recommend outfit; Looks great; Try again | "What do you think of this?" | Looks great; Try again | N/A |

As seen above, a variety of autonomous responses are defined by the records of Table 2. As noted in connection with Table 1, each record of database 246 can also include a location identifier; that is, database 246 can define distinct subsets of response data that each correspond to a different location identifier (e.g. a different product identifier, in the present example). Further, as also noted above, certain records of database 246 can omit location identifiers, or include a null location identifier. In the present example performance of method 300, the message from client device 104a indicating selection of an age bracket (from those shown in FIG. 6) does not match any of the "message content" fields, and thus the "default" response data is retrieved at block 525 and sent to client device 104a at block 515 (thus completing the performance of block 320). As also seen above, the "default" response record does not identify any corresponding action, leading to the negative determination at block 335 as mentioned above.

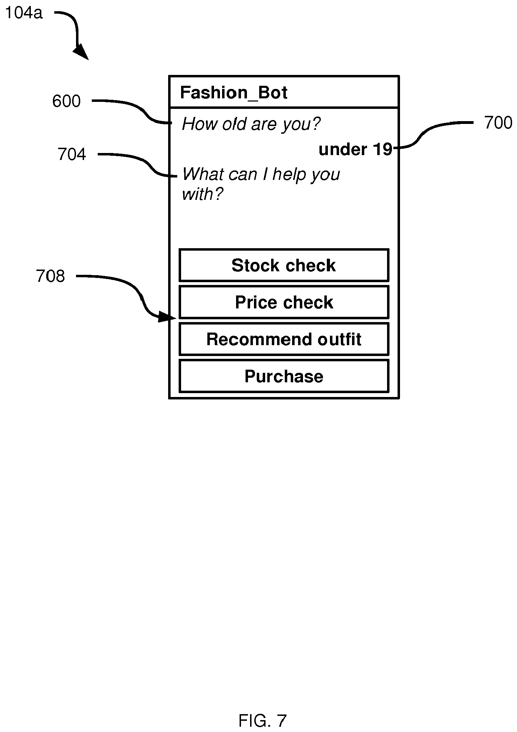

Returning to FIG. 3, following the performance of block 320, the response data selected and sent at block 320 is received and displayed by client device 104a at block 325. Turning to FIG. 7, in addition to message body 600 and a response 700 selecting one of the age brackets shown in FIG. 6, a message body 704 is depicted, corresponding to the response data selected at block 525. In addition, as defined in the first record of Table 2, a set of selectable keywords 708 is presented on display 216.

In a further performance of block 330, client device 104a is configured to receive a selection of one of the keywords shown in FIG. 7 and transmit a message to server 116 including the selected keyword. Following the receipt of the message, server 116 is configured to perform blocks 335 and 320. In the present example, it will be assumed that client device 104a receives a selection of the "Recommend Outfit" keyword shown in FIG. 7. In the performance of block 520 that follows, the determination is affirmative (i.e. the selection of "Recommend Outfit" is a request for a combination of clothing items related to the item identified in the initial message received at block 315).

Responsive to an affirmative determination at block 520, server 116 is configured to perform block 530, which includes automatically selecting a plurality of items based on the item identified in the above-mentioned graphic. In the present example, the combination of items represents an outfit, in the form of several items of clothing that are complementary to each other. In other embodiments, a variety of other combinations may be employed (e.g. complementary items of cosmetics, food items, or the like).

The selection of a product combination may be performed in a variety of ways at server 116. In the present embodiment, server 116 stores a product record in memory 234 (e.g. in an additional database) for at least a subset of the products available at the retail location in which the above-mentioned graphic is displayed. Each product record includes a class or type identifier for the corresponding item. In the present embodiment, in which the products are items of clothing, the class identifier indicates, for example, whether the item is a shirt, pants, shoes, an accessory, or the like. Each product record may also include data defining other attributes of the items, such as colours, sizes, styles (e.g. formal or casual) and the like. Each product record can also include image data (e.g. an image of the corresponding product in any suitable format), which may also be employed in the selection of product combinations.

In addition, each product record can include popularity data, derived from messages received from client devices 104 (as will be seen below) and indicating a level of popularity for the corresponding item. Each product record can also include data defining a time component of the above-mentioned popularity. For example, each record can include an indication of a rate of change in the popularity data (e.g. an increase or decrease in popularity over a predefined rolling time period).

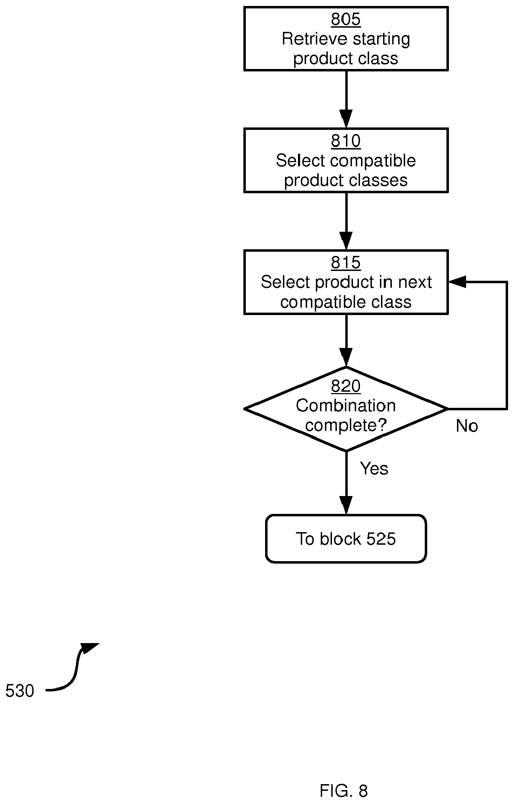

In the present embodiment, block 530 is performed as depicted in FIG. 8. In particular, at block 805, server 116 is configured to retrieve the product record corresponding to the product identifier in the message received at block 315. From that product record, server 116 is configured to retrieve the product class. At block 810, server 116 is configured to select at least one compatible product class. For example, server 116 can store compatibility records that indicate, for each class, which other classes are considered to be compatible classes (e.g. pants and shoes are compatible, while pants and skirts are not). Server 116 can be configured to retrieve all compatible classes, or only a subset of compatible classes, according to any suitable predefined criteria. For example, server 116 can be configured to select only those compatible classes necessary to generate an outfit providing full coverage (e.g. a top, a bottom and footwear).

When the compatible classes have been selected, at block 815, server 116 is configured to select a product record having one of the compatible classes. The product record may also be selected based on other criteria. For example, at block 815 server 116 may be configured to select a set of product records each having one of the compatible product classes, and to then select the product record in that set having the highest popularity level.

In some embodiments, server 116 can be configured to assess, in addition to the popularity level mentioned above, the popularity level of the product record among other users with similar profile data to client device 104a. That is, server 116 may compare the profile data corresponding to client device 104a with profile data corresponding to other client devices 104 to identify a subset of other client devices with similar profile data, and to select the product record most likely to be preferred by the subset of other client devices. As will be seen below, the profile data corresponding to each client device can also include the popularity level of an item for that particular client device. The process discussed above may also be referred to as collaborative filtering.

At block 820, having selected a product from one of the compatible classes selected at block 810, server 116 is configured to determine whether products have been selected for each of the classes selected at block 810. When the determination is negative, blocks 815 and 820 are repeated. When the determination at block 820 is affirmative, the combination is complete, and server 116 returns to block 525.

At block 525, response data is selected as described above (in the present example, response data defined by the final record of Table 2 is selected, as a result of the client device's message containing the string "Recommend outfit"). The combination and response data are then transmitted to client device 104a at block 515.

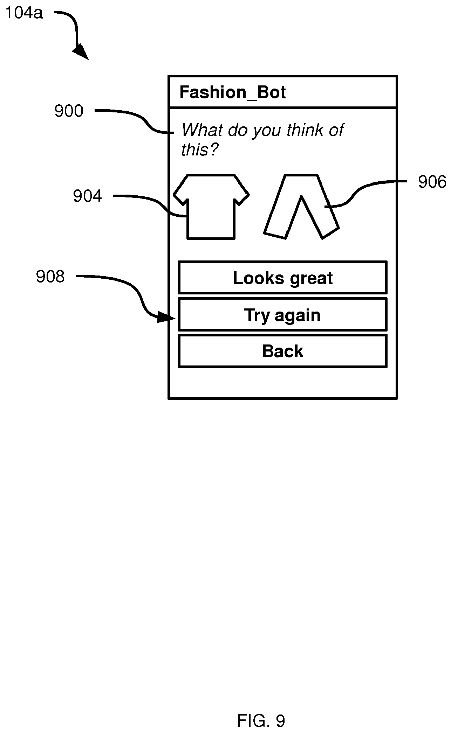

Referring now to FIG. 9, client device 104a is shown following a subsequent performance of block 325, following the receipt of the combination transmitted by server 116 at block 515. In particular, a message body 900 - selected at block 525 and corresponding to the final record of Table 2 - is presented on display 216. In addition, a product combination is presented, consisting of first and second product images 904 and 906. One of the product images corresponds to the product identified in the machine-readable graphic discussed above, while the other (and any additional product images, where more than two are included in the combination) was selected by server 116 at block 815.

Each product image can include or otherwise be associated with a network identifier such as a URL, and thus each image is selectable at client device 104a to transmit a request to a web server identified by the URL (which may be server 116 itself). Such a request may result in the receipt at client device 104a of a web page permitting client device 104a to purchase the selected product, obtain additional information concerning the selected product, or the like.

In other embodiments, the selection of one of product images 904 and 908 can cause client device 104a to transmit a further message to server 116, containing the product identifier of the illustrated product. In response to such a message, server 116 can be configured to perform block 315 of method 300, effectively "re-starting" the process described above, with respect to the selected product instead of the product identified by the machine-readable graphic.

Also presented on display 216 is a set of selectable keywords 908. As seen in Table 2, the "Looks great" and "Try again" keywords correspond to the final response data record. Additionally, server 116 is configured, responsive to receipt of a message containing either of those two keywords, to make an affirmative determination at block 520, and thereby send a further product combination to client device 104a. Server 116 is also configured, responsive to receiving a message containing either of the above-mentioned keywords, to update both the profile data corresponding to client device 104a, and the product data.

As will now be apparent to those skilled in the art, the above-mentioned keywords are preference indicators - "looks great" is a positive indication, while "try again" is a negative indication. Server 116 is therefore configured to update the profile data corresponding to client device 104a to indicate the positive or negative response to the relevant combination of products. The indication can be stored in the profile data in a variety of ways. For example, the specific product identifiers can be stored in association with the preference indicator; in other embodiments, the product classes, or other product attributes (e.g. colour, style) can be stored in association with the preference indicator. In addition, server 116 is configured to store, in the product data repository (i.e. distinctly from the profile data for client device 104a) the preference indicator in association with each of the product records. In other words, server 116 is configured to update the popularity data (e.g. a popularity score) corresponding to each of the products in the combination.

As will be apparent from Table 2, server 116 is also configured to determine whether any action is associated with messages received form client device 104a. Thus, for example, in response to receiving a message containing the string "price check", server 116 can be configured to transmit a request to fulfillment server 132 - which may be an inventory management server operated by the retail location - for a price of the product identified in the machine-readable graphic. As another example, in response to receiving a message containing a size (e.g. medium, large or the like), server 116 can be configured to transmit a request to fulfillment server 132 to determine whether the selected size of the previously identified product is in stock at the retail location. Other actions are also contemplated, such as an instruction to fulfillment server 132 to initiate a financial transaction for the purchase of the previously identified product (e.g. response to receiving a message from client device 104a containing the string "Purchase").

In further embodiments, system 100 can be deployed to collect data related to employment postings. For example, a graphic can be displayed on a door, wall, or other surface associated with a location of employment (but not necessarily at the location). The location identifier encoded in the graphics can correspond to one or more of a job posting number, an identifier of the location of employment, and the like. The records of database 246 can define keywords representing educational levels (e.g. high school, bachelor's degree, graduate degree), and the like. Thus, employment application data can be collected by system 100 and transmitted (at block 340) to a computing device tracking job applications.

In further embodiments, system 100 can be deployed to collect data related to staffing needs such as shift changes in a facility (e.g. a manufacturing plant). For example, a graphic 128 posted in the facility (e.g. at an entrance to the facility, a break room or the like) can direct client devices 104 to message server 116 to receive a set of selectable keywords representing a position performed by the operator of the client device. Server 116, in response, can transmit an instruction to fulfillment server 132 to retrieve an available employee identifier from a database and generate a message to that employee.

Other applications of system 100 to collect other types of data may also occur to those skilled in the art. It will now be apparent that all of the above embodiments need not be handled by a single application 240 at server 116. Instead, each of the above embodiments can correspond to a separate application 240 at server 116. Indeed, server 116 itself can be replicated across various physical locations.

While the examples above have referred to the scanning or capture of a graphic code to acquire the location information, it will be understood that any other suitable method of acquiring the location information can alternatively be employed, such as the previously mentioned RFID, NFC, beacon and network-related information techniques.

The various features of the above-mentioned data collection systems and methods may also be combined, as will be apparent to those skilled in the art.

The scope of the claims should not be limited by the embodiments set forth in the above examples, but should be given the broadest interpretation consistent with the description as a whole.

## Claims

1. A data collection system, comprising:
a plurality of graphical identifiers affixed to respective ones of a plurality of objects, each graphical identifier encoding a respective one of a plurality of location identifiers;
a server storing a plurality of response data records, each record including a plurality of selectable keywords; at least one of the records including an action identifier; the server configured to:
receive a message from a client device, the message containing one of the plurality of location identifiers extracted by the client device from an image of one of the graphical identifiers;
responsive to receiving the message, retrieve one of the response data records, and transmit the selectable keywords of the retrieved response data record to the client device;
receive, from the client device, a selection of one of the selectable keywords; and
based on the selection received from the client device and the location identifier, execute an action corresponding to the action identifier.

2. The system of claim 1, wherein each of the response data records includes a string defining a survey question, and wherein the selectable keywords represent responses to the survey question.

3. The system of claim 1 or claim 2, the server configured, responsive to receiving the message from the client device, to repeat the retrieval of a response data record, the transmission of the selectable keywords, and the receipt of a selection from the client device until each of the response data records have been retrieved.

4. The system of claim 1 or claim 2, the server configured, responsive to receiving the keyword selection from the client device, to select a further response data record based on the keyword selection.

5. The system of any one of claims 1 to 4, wherein the location identifiers identify respective customer seating locations within a retail environment; and
wherein the action identifier corresponds to an instruction to deliver an item to one of the customer seating locations.

6. The system of any one of claims 1 to 4, wherein the location identifiers identify respective ones of a plurality of products in a retail environment.

7. The system of claim 6, the server further configured to store a plurality of product records containing attribute data for respective ones of the plurality of products.

8. The system of claim 7, the server further configured to:
responsive to receiving the message from the client device, select a set of the product records representing a product combination, based on the attributes of the product corresponding to the location identifier contained in the message received from the client device; and
transmit, with the selectable keywords, a set of product identifiers for the product combination.

9. A method in a server for data collection, comprising:
storing a plurality of response data records, each record including a plurality of selectable keywords; at least one of the records including an action identifier;
receiving a message from a client device via a network, the message containing one of a plurality of location identifiers extracted by the client device from an image of one of a plurality of graphical identifiers affixed to respective ones of a plurality of objects;
responsive to receiving the message, retrieving one of the response data records, and transmitting the selectable keywords of the retrieved response data record to the client device;
receiving, from the client device, a selection of one of the selectable keywords; and
based on the selection received from the client device and the location identifier, executing an action corresponding to the action identifier.

10. The method of claim 9, wherein each of the response data records includes a string defining a survey question, and wherein the selectable keywords represent responses to the survey question.

11. The method of claim 9 or claim 10, further comprising:
responsive to receiving the message from the client device, repeating the retrieval of a response data record, the transmission of the selectable keywords, and the receipt of a selection from the client device until each of the response data records have been retrieved.

12. The method of claim 9 or claim 10, further comprising:
responsive to receiving the keyword selection from the client device, selecting a further response data record based on the keyword selection.

13. The method of any one of claims 9 to 12, wherein the location identifiers identify respective customer seating locations within a retail environment; and
wherein the action identifier corresponds to an instruction to deliver an item to one of the customer seating locations.

14. The method of any one of claims 9 to 12, wherein the location identifiers identify respective ones of a plurality of products in a retail environment; the method further comprising storing a plurality of product records containing attribute data for respective ones of the plurality of products.

15. The method of claim 14, further comprising:
responsive to receiving the message from the client device, selecting a set of the product records representing a product combination, based on the attributes of the product corresponding to the location identifier contained in the message received from the client device; and
transmitting, with the selectable keywords, a set of product identifiers for the product combination.
